# EUROPEAN PATENT APPLICATION

(11) **EP 1 401 168 A1**
(43) Date of publication of application: **24.03.2004**
(21) Application number: 02292323.9
(22) Date of filing: 20.09.2002
(51) Int. Cl.: H04L 29/06, H04L 29/12

(54) **A method to transport an internet packet and related network elements**

(71) Applicant: ALCATEL, 75008 Paris (FR)
(72) Inventor: Leroy, Suresh André Jean-Marie, 2340 Vlimmeren (BE); Bos, Lieve Marie Marcella Rosemarijn, 2340 Vlimmeren (BE); De Vriendt, Johan André, 9051 Afsnee (BE)
(74) Representative: Narmon, Gisèle Marie Thérèse

(57) **Abstract**

The present invention describes a method for use in a Generic Packet Radio System backbone network to either downstream or upstream transport an internet packet being destined to a terminal from a gateway support node via a serving support node to a radio network controller. The internet packet comprises a header that comprises an address of the terminal. The method comprises for the downstream transportation the steps of:
- transforming the header into a backbone header by the gateway support node; and
- inserting in a the backbone header by the gateway support node and the serving support node, respectively, an address of the serving support node and an address of the radio network controller; and
- forwarding the internet packet after each insertion step from the gateway support node via the serving support node to the radio network controller according to a respective address in the backbone header; and
- keeping and reminding the address of the terminal during the forwarding by comprising by the gateway support node in the internet packet an address extension header; and inserting in the address extension header the address of the terminal; and by the radio network controller transforming the backbone header again into the original header format of the internet packet and extracting, after the forwarding, from the address extension header the address of the terminal for insertion of it again in the header and hereby enabling the forwarding of the internet packet to the terminal according to the address of the terminal in the header. The upstream transportation is executed in the opposite direction whereby the different steps being executed during downstream transportation by the gateway support node are now executed during upstream transportation by the radio network controller and vice versa.

## Description

The present invention relates to a method to downstream transport an internet packet in a Generic Packet Radio System backbone network GPRS, and to a method to upstream transport an internet packet in a Generic Packet Radio System backbone network GPRS, and to a gateway support node, a serving support node and a radio network controller which are realizing the above method and to a Generic Packet Radio System backbone network GPRS that comprises such a gateway support node, a serving support node and a radio network controller.

Such a method with related devices and Generic Packet Radio System backbone network are already known in the art. Indeed, GPRS Generic Packet Radio System defines a new mobile packet switched service in Universal Mobile Telecommunication Standard, shortly UMTS. With GPRS Generic Packet Radio Systems the mobile subscriber gets Internet and intranet access from his mobile GPRS terminal. This mobile abstraction is achieved in the Universal Mobile Telephone Standard UMTS core by tunneling the internet packets of the mobile terminal on top of the Internet Protocol by using the GPRS Tunneling Protocol GTP.

The *current GPRS specification of the 3*^{*rd*} *Generation Partnership Project 3GPP with reference "3GPP TS 23.060" uses two Internet Protocol levels:*
a) The transport Internet Protocol level also called the GPRS Generic Packet Radio System backbone network that handles all the core network mobility aspects for the end-user. If a user changes its location e.g. in the event of handover, the destination address of the internet packets at this transport level are also changing to this new location.
b) The user plane level comprises all the internet packets such as e.g. Hypertext Transfer Protocol HTTP packets, that are exchanged between the end-users.

The GPRS Tunneling Protocol GTP runs between these two Internet Protocol IP layers.

GPRS Tunneling Protocol GTP itself consists of two sub-protocols:
1) GTP-U User plane that is used to tunnel the end-user's IP packets
2) GTP-C Control plane that is the signaling protocol corresponding to the GTP.

Hereby an Internet Packet being destined to a mobile terminal is transported over the Generic Packet Radio System backbone network either downstream from a gateway support node via a serving support node to a radio network controller or vice versa upstream from the radio network controller via the serving support node to the gateway support node. As it is known, to a person skilled in the art, such an internet packet comprises in its internet packet header a destination address field in order to forward the internet packet at the user plane level to its destination i.e. beyond the gateway support node to the radio network controller link. Hereby, the destination address field of the header comprises the internet protocol address of the terminal for whom the internet packet is destined.

It has to be explained that the existing Generic Packet Radio System GPRS stack comprises at the transport layer:
- In the overhead: the associated bytes of the Internet Protocol and of the User Data Protocol, plus the associated bytes of the GPRS Tunneling Protocol GTP, which is installed on top of again the associated bytes of the Internet Protocol and User Data Protocol or Transmission control Protocol; and
- In the payload: the data to be transported.

At the User Plane Level, either the known Internet Protocol Version 4 or the Internet Protocol Version 6 is used. The Internet Protocol Version 4, shortly IPv4, comprises 20 bytes. Whereas the Internet Protocol Version 6, shortly IPv6, comprises 40 bytes. When looking at the IPv6 evolution of the protocol, the overhead of IPv6 gets worse being compared to the IPv4 protocol. Indeed, the overhead of an lPv6 internet packet comprises 40 bytes, which is twice the size of an IPv4 internet packet.

Now, in UMTS Release 5, Internet Protocol multimedia on top of GPRS is introduced by using for the user plane level the Internet Protocol Version 6 lPv6.

When looking to e.g. a typical Voice over Internet Protocol VolP packet, a codec sample of more or less 30 bytes is transported over Real Time Protocol RTP over User Data Protocol UDP over Internet Protocol which all together comprises 60 bytes. If such a packet is tunneled over the Internet Protocol lPv6 by using GPRS Tunneling Protocol, the overhead becomes larger than 300%.

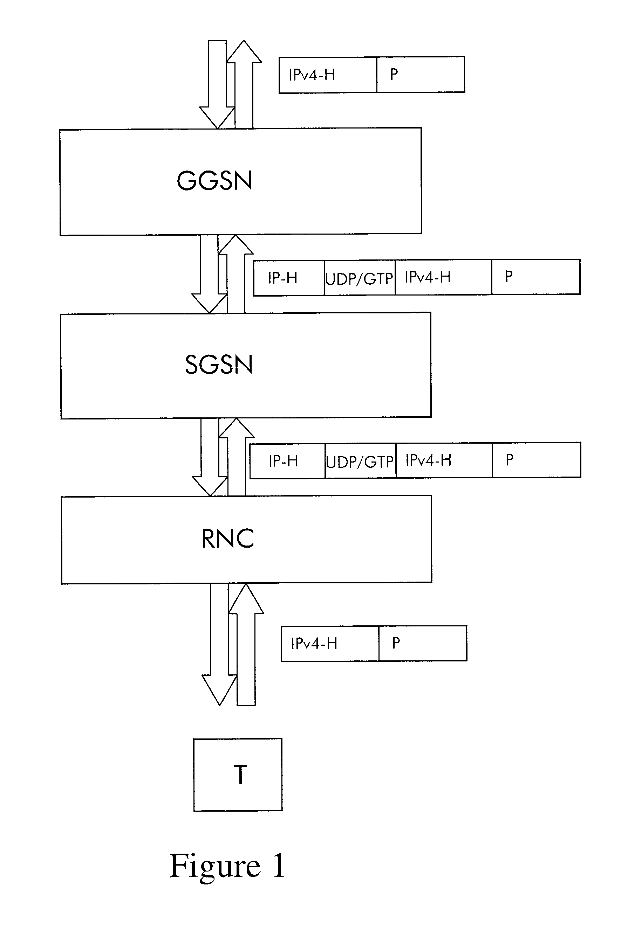

Indeed, the information to be transported is encapsulated in an Internet Protocol packet, either with an IPv4 packet-header or and IPv6 packet-header. This global packet receives for the transportation over the Generic Packet Radio System GPRS backbone network a header of the User Data Protocol over GPRS Tunneling Protocol and again an Internet Protocol Version 6 header. This is shown in Figure 1 that will be explained more in detail in a further paragraph.

In this way, the existing GPRS protocol stack becomes very inefficient in terms of overhead due to the double IP layers in the Generic Packet Radio System backbone network.

An object of the present invention is to provide a method to downstream transport an internet packet in a Generic Packet Radio System backbone network GPRS according to claim 1 which has not the above drawback, and to provide a method to upstream transport an internet packet in a Generic Packet Radio System backbone network GPRS according to claim 2 which has not the above drawback, and to provide a gateway support node according to claim 9, a serving support node according to claim 11, and a radio network controller according to claim 10 which are realizing such a method and which don't have the above drawback, and to provide a Generic Packet Radio System backbone network GPRS according to claim 12 that comprises such a gateway support node, such a serving support node or such a radio network controller and that does not have the above drawback.

According to the invention, this object is achieved due to the fact that instead of using the GPRS Tunneling Protocol for the transportation of the user-plane packets, the internet packets are directly transported at the transport layer by means of the introduction of an address extension header. Hereby the need for a separate Internet Protocol transport layer is completely eliminated i.e. no need anymore for the overhead being introduced by the GPRS Tunneling Protocol over User Data Protocol over the Internet Protocol. The solution reduces hereby the overhead of the Internet Protocol over the User Data Protocol over the GPRS Tunneling Protocol to only the size of the introduced address extension header.

Hereby the method according to the present invention for use in a Generic Packet Radio System backbone network to downstream transport an internet packet being destined to a terminal from a gateway support node via a serving support node to a radio network controller whereby the internet packet comprises a header that comprises an address of the terminal, comprises the steps of:
- by the first transforming means of the gateway support node, transforming the header into a backbone header; and
- inserting, upon reception of the internet packet, in the backbone address by the first inserting means of the gateway support node and by third inserting means of the serving support node, respectively, an address of the serving support node and an address of said radio network controller; and
- forwarding by the first forwarding means of the gateway support node or by the third forwarding means of the serving support node, the internet packet after each above described insertion from the gateway support node via the serving support node to the radio network controller according to a respective address being included in the destination address field; and
- keeping the address of the terminal during the respective forwarding steps by comprising by the first comprising means of the gateway support node in the internet packet an address extension header. The address of the terminal is inserted by the first extension inserting means of the gateway support node in the comprised address extension header. After the different forwarding steps the radio network controller executes with its fourth transforming means a step of transforming of the backbone header again into the header; and with its second extracting means a step of extracting from the address extension header the address of the terminal and inserting the address of the terminal again in the header of the initial internet packet in order to enable further forwarding of the internet packet to the terminal according to the address of the terminal in the header.

The different described steps are executed in the opposite direction in the event of transporting the internet packet upstream from a terminal over the GPRS backbone network to a destined terminal. According to this way, the radio network controller transforms with its third transforming means the header with a backbone header and inserts with its second inserting means in the backbone header the address of the serving support node which on its turn will insert in the backbone header the address of the gateway support node. After each respective insertion, the internet packet is forwarded according to the address being included in the backbone header. In order to remember the address of the terminal, again the extra steps are executed to keep the address of the terminal. Therefor, in the upstream direction, the radio network controller comprises with its second comprising means an address extension header in the internet packet. The address of the terminal is inserted by means of the second extension inserting means of the radio network controller in this address extension header. Upon reception of the global packet by the gateway support node, the gateway support node transforms again the backbone header with the original header format and extracts the address of the terminal by means of its first extracting means from the address extension header in order to be inserted in the destination address field of the header of the internet packet. Hereby the internet packet is enabled to be forwarded to the destined terminal again according to the internet address in its destination field of its header.

A first remark is that the above different transforming steps being executed by the different transforming means, means that the format of the respective headers are interchanged. As an example, in the event when a header is transformed by a backbone header, is the structure of the header according to its defined Internet Protocol Version transformed with the structure of the backbone header which is determined according to a defined version of the Internet Protocol for the GPRS backbone transportation. Together with such a transformation, particular values comprised in predefined fields of one or the other header format must be taken over by the other format during this transformation. This will be explained in more detail in a further paragraph.

It has to be remarked that the destined terminal in the downstream scenario can be implemented by a mobile terminal in the access network whereas the destined terminal in the upstream scenario might be implemented by any IP aware node e.g. a mobile terminal, a Personal Computer or a Internet Protocol Server.

As already explained above, the actual preferred implementation of the internet protocol being used over the Generic Packet Radio System backbone network, either in downstream direction or upstream direction, is the Internet Protocol Version 6. Hereby the backbone header takes the format of an Internet Protocol Version 6 header. This is described in claim 3.

Furthermore, the internet protocol being transported used outside the Generic Packet Radio system backbone network i.e. for downstream transporting of the internet packet from the radio network controller to the terminal or for upstream transporting the internet packet from the gateway support node to the terminal, can be implemented by either the Internet Protocol Version 6 or the Internet Protocol Version 4. This is described in claim 4 and claim 5, respectively.

It has to be explained here that in the event of using the Internet Protocol Version 6 as well outside as over the GPRS backbone network, the step of transforming the header into the backbone header and the step of transforming the backbone header into the header becomes a step of merely equalizing both header definitions since they already have the same format. This is described in claim 4.

Furthermore in the event when outside the GPRS backbone network the Internet Protocol Version 4 is used in over the GPRSR backbone network the Internet Protocol Version 6 is used, the step of transforming the header into the backbone header and the step of transforming the backbone header into the header becomes a step of mapping, respectively, the Internet Protocol Version 4 header format onto the Internet Protocol Version 6 header format and vice versa.

Furthermore it has to be explained that in the event when the internet protocol being used over the Generic Packet Radio System backbone network is implemented by the Internet Protocol Version 6 and when the internet protocol being used outside the Generic Packet Radio system backbone network is implemented by the Internet Protocol Version 4, the implementation of the extension header and the insertion of the address of the terminal in the created extension header can be implemented according to different ways. Three preferred implementations are described below.

In claim 6 a first possible implementation is described. Herein, the method further comprises defining the address extension header as an Internet Protocol Version 4-address extension header being referred to in the backbone header of the Internet packet. Furthermore, during the transformation step, an Internet Protocol Version 4 source address of the internet packet is also inserted in this address extension header.

Claim 7 describes that the method further comprises defining the address extension header as an Internet Protocol Version 6 address extension header whereby during the step of transforming the header into the backbone header also an Internet Protocol Version 4 source address of the internet packet is mapped and inserted in a source field of an Internet Protocol Version 6 header of the internet packet i.e. the backbone header.

A third possible implementation is described in claim 8. Herein the method further comprises defining the address extension header as an Internet Protocol Version 6 address extension header and during the step of transforming the header into the backbone header also an Internet Protocol Version 4 source address of the internet packet is mapped and inserted in the Internet Protocol Version 6 address extension header.

Finally it has to be remarked that in the event of using Internet Protocol Version 4 at the User plane level, it might be required that also extra fields of the original Internet Protocol Version 4 packet has to be comprised in the address extension header in order to be reminded and to be extracted for use upon delivery at the border of the GPRS backbone network. This is dependent of the way how the transformation of one header format into the other header format is implemented.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

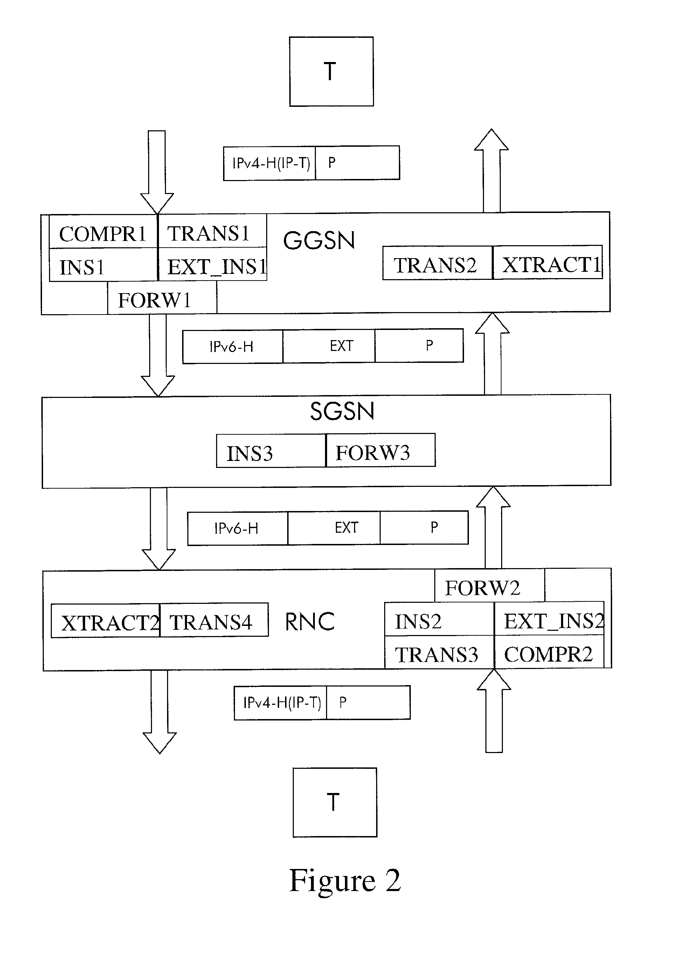

The above and other objects and features of the invention will become more apparent and the invention itself will be best understood by referring to the following description of an embodiment taken in conjunction with the accompanying drawings wherein Figure 1 represents a prior art Generic Packet Radio System backbone network and Figure 2 represent a Generic Packet Radio System backbone network according to the present invention.

Referring to Figure 1, a prior art GPRS backbone network is shown. The GPRS backbone network comprises a gateway GPRS support node GGSN, a serving GPRS support node SGSN and a radio network controller RNC. The gateway support node GGSN is coupled via the serving support node SGSN to the radio network controller RNC.

It has to be remarked that between these three network elements different routers might be coupled. However, this goes beyond the aim of this invention and will not be described in detail. Furthermore, the gateway support node is coupled to an Internet Network (not shown) and the radio network controller is coupled to an access network (not shown). In the access network one or more antennas, which are coupled to the radio network controller, are providing access to the different mobile terminals. One of these mobile terminals is shown in Figure 1 as terminal T.

As already described above, with GPRS, the mobile user gets access to the Internet with a mobile terminal T.

However, between the different GPRS backbone elements, the existing GPRS protocol stack tunnels every Internet Protocol application packet on top of an Internet Protocol. The top layer is called the User layer or also called the application layer. The lower layer is called the transport layer and handles all the mobility. Between these two layers a GPRS tunneling protocol - user plane, shortly GTP-U, tunneling protocol is used.

This existing protocol stack is very inefficient in terms of overhead due to these double Internet Protocol layers. Indeed, every Internet Protocol packet at the application layer is tunneled on top of Internet Protocol in the GPRS backbone.

This is shown in Figure 1. The gateway support node GGSN receives an Internet Packet e.g. according to the Internet Protocol Version 4, from an Internet network. This packet is shown in Figure 1 with its header IPv4-H and its payload P. This header IPv4-H of the internet packet comprises the internet packet destination address i.e. the internet address of the destined terminal T in a special field called the destination address field of the internet packet.

The gateway support node GGSN encapsulates this packet with the GTP-U protocol overhead UDP/GTP and in order to transport this packet over the GPRS backbone network, the packet receives again an Internet Protocol overhead i.e. shown as IP-H. Since this packet needs to be transported to the serving GPRS support node SGSN, the gateway GPRS support node determines according to forwarding information of a forwarding table an GPRS - Internet Protocol address of the serving support node and inserts this in the header IP-H of the global packet. According to the internet destination address of the serving GPRS support node, the packet is forwarded to the serving GPRS support node.

Upon reception of the packet by the serving GPRS support node SGSN, the serving GPRS support node determines according to forwarding information in forwarding tables the internet address of the radio network controller RNC. This GPRS-IP destination address of the radio network controller is inserted in the destination field of the header of the packet i.e. the IP-H header.

According to the internet destination address of the radio network controller, the packet is forwarded to the radio network controller.

The radio network controller RNC restores the packet in its original form i.e. the IP-transport layer header IP-H is removed and the UDP/GTP overhead is removed. Hereby the original packet can be further forwarded to the terminal according to the address of the terminal in the destination address field of the header IPv4-H of the original internet packet.

The transportation of an internet packet from the terminal T to the Internet Network over the GPRS backbone network is executed in the opposite way as described above. This means that the radio network controller encapsulates the original packet with an UDP/GTP overhead and a IP-H header of the transport layer. The packet is forwarded according to the respective destination addresses in the header of the IP-H header from the radio network controller via the serving GPRS support node to the gateway GPRS support node. Upon reception of the encapsulated packet the gateway GPRS support node removes the respective headers in order to forward the internet packet according to its original form.

When looking to the created overhead of the original internet packet, it becomes clear that, and especially as explained above, in the event when the Internet Protocol Version 6 is used for the transport layer, the overhead of the total package i.e. (IP-H + UDP/GTP + IPv4-H) being compared to the real data to be transported i.e. P becomes too big and hereby very inefficient.

In order to improve the efficiency of the overhead versus the to be transported data, the present invention eliminates the use of the GTP-U and transports the user-plane packets directly at the transport layer by introducing an address extension header. This will become more clear in the following paragraphs.

Referring to Figure 2, a GPRS backbone network according to the present invention is shown. The GPRS backbone network comprises a gateway GPRS support node GGSN being coupled via a serving GPRS support node SGSN to a radio network controller RNC.

The above remark concerning the comprised routers along the GPRS backbone path is also valid in this GPRS backbone network of Figure 2. However, in order not to overload the Figure, these routers and e.g. antennas are not shown.

The working of the different network elements according to the present invention in accordance with its telecommunication environment that is shown in Figure 2 will be explained by means of a functional description of the different blocks shown therein. Based on this description, the practical implementation of the blocks will be obvious to a person skilled in the art and will therefor not be described in details. In addition, the principle working of the method for use in a GPRS backbone network to transport an internet packet being destined to a terminal will be described in further detail.

The gateway GPRS support node GGSN, the serving GPRS support node and the radio network controller according to the present invention, are comprised in a Generic Packet Radio System backbone network to downstream transport and to upstream transport an internet packet being destined to a terminal T, respectively, from this gateway GPRS support node GGSN via the serving GPRS support node SGSN to the radio network controller RNC, and from the radio network controller RNC via the serving GPRS support node SGSN to the gateway GPRS support node GGSN.

It is preferred for the description of this embodiment to define the Internet Protocol outside the GPRS backbone network as the Internet Protocol Version 4 and to define the header format of the backbone header according to the Internet Protocol Version 6 and to define the format for the address extension header according to the Internet Protocol Version 6.

As described above, the internet packet comprises a destination address field in its header, called IPv4-H, that comprises the internet address IP-T of the terminal T. This is shown in Figure 2 as IPv4-H(IP-T). The internet packet is either transmitted downstream from the gateway GPRS support node towards the radio network controller or either transmitted upstream from the radio network controller towards the gateway GPRS support node. In the downstream direction, the terminal T whereto the internet packet is destined, is implemented by a mobile terminal of a user. In the upstream direction, the terminal T whereto the internet packet is destined is implemented by e.g. an other mobile terminal, a Personal computer, a Server or any other IP-aware-network element.

The gateway support node GGSN comprises for the event of downstream transporting of the internet packet :
- first transforming means TRANS1 enabled to transform the header IPv4-H of the received internet packet into a backbone header IPv6-H which is used to transport the packet over the GPRS backbone network; and
- first inserting means INS 1 enabled to insert in the destination address field an address of the serving support node. The address of the serving support node is determined according to forwarding information of a forwarding table.
- first forwarding means FORW1 to forward the internet packet from the gateway GPRS support node GGSN to the serving GPRS support node SGSN according to a respective address in the backbone header being the address of the serving GPRS support node IP-SGSN and to enable thereby the serving GPRS support node SGSN to forward the internet packet to the radio network controller RNC; and
- first comprising means COMPR1 to comprise in the internet packet an address extension header EXT; and
- first extension inserting means EXT_INS1 to insert in the address extension header EXT the destination address of the terminal IP-T and the source address of the terminal IP-T. Hereby the destination address of the terminal IP-T and the source address of the terminal IP-T are reminded during the different forwarding steps. Also the radio network controller RNC is enabled hereby to recuperate the terminal address i.e. the destination address and to further forward the internet packet to the terminal T accordingly.

Furthermore, the gateway GPRS support node GGSN comprises for the event of upstream transport of the internet packet:
- second transforming means TRANS2 to transform the backbone header format IPv6-H again into the header format IPv4-H of the internet packet; and
- first extracting means XTRACT1 to extract from the address extension header EXT the IPv4 destination address and the IPv4 source address of the terminal IP-T and to insert these addresses again, respectively, in the destination address field and the source address field of the header of the internet packet in order to enable further forwarding of the internet packet to the terminal T according the address of the terminal IP-T in header.

The radio network controller RNC comprises for the event of upstream transport of said internet packet:
- third transforming means TRANS3 to transform the header format of the internet packet IPv4-H into the format of the backbone header IPv6-H ; and
- second inserting means INS2 to insert in this backbone header IPv6-H an address of the serving support node SGSN. This address is determined according to forwarding information of a forwarding table; and
- second forwarding means FORW2 to forward the internet packet from the radio network controller RNC to the serving support node SGSN according to a respective address in the backbone header being the address of the serving support node and to enable thereby the serving support node SGSN to forward the internet packet to the gateway support node GGSN; and
- second comprising means COMPR2 to comprise in the internet packet an address extension header EXT; and
- second extension inserting means EXT_INS2 to insert the address extension header EXT the address of the destination address field i.e. the terminal address IP-T and the address of the source address field. Hereby the address of the terminal IP-T is reminded during the different forwarding steps. The reminded address in the extension header also enables the gateway support node GGSN to recuperate the address of the terminal IP-T and to further forward the internet packet to the terminal (T).

The radio network controller RNC comprises for the event of downstream transport of the internet packet:
- fourth transforming means TRANS4 to transform the format of the backbone header into the format of the header of the original internet packet; and
- second extracting means XTRACT2 to extract from the address extension header EXT the address the terminal IP-T and the source address. The address of the terminal is again inserted in the header IPv4-H of the original packet whereby further forwarding of the internet packet to the terminal T according to the address of the terminal IP-T in the header, is enabled.

The serving GPRS support node SGSN comprises as well for the downstream transport as for the upstream transport of the internet packet:
- third inserting means INS3 to insert, upon reception of the internet packet, in a backbone header of the packet, for the event of downstream transport of the internet packet (IP), an address of the radio network controller RNC; and for the event of upstream transport of the internet packet an address of the gateway GPRS support node GGSN. Both addresses are determind according to forwarding information of a forwarding table; and
- third forwarding means FORW3 to forward the internet packet according to the respective address in the backbone header. This address is in the event of downstream transport of the internet packet the internet address of the radio network controller RNC and in the event of upstream transport of the internet packet the internet address of the gateway GPRS support node GGSN.

It has to be reminded here that the in the event of another embodiment wherein both Internet Protocol header formats (outside and over the GPRS backbone network) should be defined according to the Internet Protocol Version 6, the above described transformation steps are becoming a merely equalization of the definitions for both formats i.e. format of header and format of backbone header. Indeed, for such a network, the header of the original internet packet is in fact not changed during this transformation step. The principle working is in such a case is reduced to the insertion and extraction of the terminal destination address in the extension header and the respective insertion of the different GPRS backbone network elements in the backbone header in order to transport the packet over the GPRS backbone network.

Hereafter a the principle working of the method according to the invention for use in a GPRS backbone network to transport an internet packet being destined to a terminal will be described in detail.

Presume that an internet packet is received by the gateway support node. This packet is destined for the mobile terminal T, at the foot of Figure 2, and comprises in a special destination address field of its header the internet address of the terminal T. The internet packet is to be downstream transported over the GPRS backbone network.

The gateway support node GGSN executes first the following steps:
- transforming the header of the internet packet with a backbone header; and
- keeping the address of the terminal IP-T by comprising in the internet packet an address extension header EXT; and
- inserting in the address extension header EXT the address of the terminal IP-T; and
- inserting the source address of the header IPv4-H into the address extension header EXT; and
- inserting in the backbone header IPv6-H an internet address of the serving GPRS support node SGSN; and
- forwarding the internet packet after these insertion steps from the gateway GPRS support node GGSN to the serving GPRS support node SGNS according to the respective address in the backbone header.

The serving GPRS support node SGSN executes hereafter the following steps:
- inserting in the backbone header IPv6-H an internet address of the radio network controller; and
- forwarding the internet packet after this insertion step from the serving GPRS support node SGNS to the radio network controller RNC according to the respective address in the backbone header IPv6-H.

Finally the radio network controller RNC executes the following steps:
- replacing the backbone header with the original header format; and
- extracting from the address extension header EXT the reminded destination address of the terminal IP-T and the reminded source address of the original IPv4-H for insertion of it again in the original header whereby a forwarding of the internet packet to the terminal T according to the address of the terminal IP-T in the header is enabled.

Presume that the terminal T generates a reply whereby an internet packet is received by the radio network controller in order to be upstream transported over the GPRS backbone network. This packet is destined for the mobile terminal T, at the top of Figure 2, comprises in a special destination address field of its header IPv4-H the internet address of the terminal lP-T.

The radio network controller RNC executes first the following steps:
- transforming the header IPv4-H into a backbone header IPv6-H; and
- reminding the address of the terminal IP-T by comprising in the internet packet an address extension header EXT; and
- inserting in the address extension header EXT the address of the terminal IP-T; and
- inserting in the address extension header EXT the source address of IPv4-H; and
- inserting in the backbone header IPv6-H an internet address of the serving support node SGSN; and
- forwarding the internet packet after these insertion steps from the serving support node SGNS according to the respective address in the backbone header IPv6-H.

The serving GPRS support node SGSN executes hereafter the following steps:
- inserting in the backbone header IPv6-H an internet address of the gateway GPRS support node GGSN; and
- forwarding the internet packet after this insertion step from the serving GPRS support node SGNS to the gateway support node GGSN according to the respective address in the backbone header IPv6-H.

Finally the gateway GPRS support node GGSN executes the following steps:
- transforming the backbone header IPv6-H with the original header format IPv4-H; and
- extracting from the address extension header EXT the reminded address of the terminal IP-T and the reminded source address of the header IPv4-H of the original packet for insertion of it again in the original header whereby a forwarding of the internet packet to the terminal T according to the address of the terminal IP-T in the header is enabled.

It has to be remarked that although in the above description of the GPRS backbone network the transportation is explained under the assumption that the original packet is a Internet Protocol Version 4 packet, the original packet might be as well an Internet Protocol Version 6 packet. It has to be remarked that

A further remark is that although in the above described embodiment the source address of the original internet packet in the header IPv4-H is stored, in order to be reminded during transportation, into the address extension header EXT, this place is only mentioned as a matter of preferred embodiment. Indeed, the above description might be adapted in order to insert the source address of the original internet packet into another field such as e.g. the Internet Protocol Version 6 backbone header of the global packet, for being reminded during transportation.

Furthermore, it is also clear that the Internet Protocol Version which is preferred for the description of this particular embodiment i.e. lPv6 Internet protocol is no limitation to the present invention. Indeed, other suitable Internet Protocol Versions might be as well used to implement the backbone header according to the present invention.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. Method for use in a Generic Packet Radio System backbone network to downstream transport an internet packet being destined to a terminal (T) from a gateway GPRS support node (GGSN) via a serving GPRS support node (SGSN) to a radio network controller (RNC), said internet packet comprises a header that comprises an address (IP-T) of said terminal (T), **characterized in that** said method comprises the steps of:
- transforming said header of said internet packet into a backbone header, by said gateway GPRS support node (GGSN); and
- inserting in a said backbone header by said gateway GPRS support node (GGSN) and said serving GPRS support node (SGSN), respectively, an address of said serving GPRS support node and an address of said radio network controller; and
- forwarding said internet packet after each said insertion from said gateway GPRS support node (GGSN) via said serving GPRS support node (SGNS) to said radio network controller (RNC) according to a respective address in said backbone header; and
- keeping said address of said terminal (lP-T) during said forwarding by comprising by said gateway GPRS support node (GGSN) in said internet packet an address extension header (EXT); and inserting in said address extension header (EXT) said address of said terminal (IP-T); and by said radio network controller (RNC) transforming again said backbone header into said header of said original internet packet and extracting, after said forwarding, from said address extension header (EXT) said address of said terminal (IP-T) for insertion of it again in said header in order to enable forwarding of said internet packet to said terminal (T) according to said address of said terminal (IP-T) in said header.

2. Method for use in a Generic Packet Radio System backbone network to upstream transport an internet packet being destined to a terminal (T) from a radio network controller (RNC) via a serving GPRS support node (SGSN) to a gateway GPRS support node (GGSN), said internet packet comprises a header that comprises an address (IP-T) of said terminal (T), **characterized in that** said method comprises the steps of:
- transforming said header into a backbone header by said radio network controller (RNC); and
- inserting in said backbone header by said radio network controller (RNC) and said serving GPRS support node (SGSN), respectively, an address of said serving support node and an address of said gateway support node; and
- forwarding said internet packet after each said insertion from said radio network controller (RNC) via said serving GPRS support node (SGSN) to said gateway GPRS support node (GGSN) according to a respective address in said backbone header; and
- keeping said address of said terminal (IP-T) during said forwarding by comprising by said radio network controller (RNC) in said internet packet an address extension header (EXT); and by inserting in said address extension header (EXT) said address of said terminal (IP-T); and by said gateway support node transforming said backbone header again into said header and extracting from said extension header (EXT) after said forwarding said address of said terminal (IP-T) in order to be inserted again in said header and to enable further forwarding to said terminal (T) according to said address of said terminal (IP-T) in header.

3. The method according to anyone of claim 1 and claim 2, **characterized in that** said method further comprises the steps of, respectively, downstream and upstream, transporting said internet packet between said gateway GPRS support node (GGSN) via said serving GPRS support node (SGSN) and said radio network controller (RNC) according to the Internet Protocol Version 6 whereby said backbone header is an internet protocol header according to the internet protocol Version 6.

4. The method according to claim 3, **characterized in that** said method further comprises the steps of, respectively, downstream transporting said internet packet from said radio network controller (RNC) to said terminal (T) and upstream transporting said internet packet from gateway GPRS support node (GGSN) to said terminal (T) according to the Internet Protocol Version 6 whereby said header is an Internet Protocol Version 6 header and whereby said step of transforming said header into said backbone header and said step of transforming said backbone header into said header becomes a step of equalizing both header definitions.

5. The method according to claim3, **characterized in that** said method further comprises the steps of, respectively, downstream transporting said internet packet from said radio network controller (RNC) to said terminal (T) and upstream transporting said internet packet from gateway GPRS support node (GGSN) to said terminal (T) according to the Internet Protocol Version 4 whereby said header is an Internet Protocol Version 4 header and whereby said step of transforming said header into said backbone header and said step of transforming said backbone header into said header becomes a step of mapping one header format onto another header format.

6. The method according to claim 5, **characterized in that** said method further comprises defining said address extension header (EXT) as an Internet Protocol Version 4 address extension header being referred to in said backbone header of said internet packet and during said steps of transforming said header into said backbone header also inserting an Internet Protocol Version 4 source address of said internet packet in said address extension header (EXT).

7. The method according to claim 5, **characterized in that** said method further comprises defining said address extension header (EXT) as an Internet Protocol Version 6 address extension header and during said step of transforming said header into said backbone header, also mapping and inserting an Internet Protocol Version 4 source address of said internet packet in a source field of said Internet Protocol Version 6 backbone header.

8. The method according to claim 5, **characterized in that** said method further comprises defining said address extension header (EXT) as an Internet Protocol Version 6 address extension header and during said step of transforming said header into said backbone header also mapping and inserting an Internet Protocol Version 4 source address of said internet packet in said Internet Protocol Version 6 address extension header (EXT).

9. A gateway GPRS support node (GGSN) in a Generic Packet Radio System backbone network to downstream transport and to upstream transport an internet packet being destined to a terminal (T), respectively, from said gateway GPRS support node (GGSN) via a serving GPRS support node (SGSN) to a radio network controller (RNC), and from said radio network controller (RNC) via said serving GPRS support node (SGSN) to said gateway GPRS support node (GGSN), said internet packet comprises a header that comprises an address (IP-T) of said terminal (T), **characterized in that** said gateway GPRS support node (GGSN) comprises for the event of downstream transporting of said internet packet :
- first transforming means (TRANS1) to transform said header into a backbone header; and
- first inserting means (INS1) to insert in said backbone header an address of said serving support node; and
- first forwarding means (FORW1) to forward said internet packet from said gateway GPRS support node (GGSN) to said serving GPRS support node (SGNS) according to a respective address in said backbone header being said address of said serving support node and to enable thereby said serving GPRS support node (SGSN) to forward said internet packet to said radio network controller (RNC); and
- first comprising means (COMPR1) to comprise in said internet packet an address extension header (EXT); and
- first extension inserting means (EXT_INS1 ) to insert in said address extension header (EXT) said address of said terminal (IP-T) thereby keeping said address of said terminal (IP-T) during said forwarding and enabling said radio network controller (RNC) to recuperate said address of said terminal and to further forward said internet packet to said terminal (T) according to said address of said terminal (IP-T);
and that said gateway GPRS support node (GGSN) comprises for the event of upstream transport of said internet packet :
- second transforming means (TRANS2) to transform said backbone header into said header; and
- first extracting means (XTRACTI) to extract from said address extension header (EXT) said address of said terminal (IP-T) and to insert said address of said terminal (IP-T) again in header in order to enable further forwarding of said internet packet to said terminal (T) according to said address of said terminal (IP-T) in said header.

10. A radio network controller (RNC) in a Generic Packet Radio System backbone network to downstream transport and to upstream transport an internet packet being destined to a terminal (T), respectively, from a gateway GPRS support node (GGSN) via a serving GPRS support node (SGSN) to said radio network controller (RNC), and from said radio network controller (RNC) via said serving GPRS support node (SGSN) to said gateway GPRS support node (GGSN), said internet packet comprises a header that comprises an address (IP-T) of said terminal (T), **characterized in that** said radio network controller (RNC) comprises for the event of upstream transport of said internet packet :
- third transforming means (TRANS3) to transform said header into a backbone header; and
- second inserting means (INS2) to insert in said backbone header an address of said serving support node ; and
- second forwarding means (FORW2) to forward said internet packet from said radio network controller (RNC) to said serving support node (SGNS) according to a respective address in said backbone header being said address of said serving support node and to enable thereby said serving GPRS support node (SGSN) to forward said internet packet to said gateway GPRS support node (GGSN); and
- second comprising means (COMPR2) to comprise in said internet packet an address extension header (EXT); and
- second extension inserting means (EXT_INS2) to insert in said address extension header (EXT) said address of said terminal (IP-T) thereby keeping said address of said terminal (IP-T) during said forwarding and enabling said gateway GPRS support node (GGSN) to recuperate said address of said terminal (IP-T) and to further forward said internet packet to said terminal (T); and that said radio network controller (RNC) comprises for the event of downstream transport of said internet packet :
- fourth transforming means (REPL4) to transform said backbone header into said header; and
- second extracting means (XTRACT2) to extract from said address extension header (EXT) said address of said terminal (IP-T) and to insert said address of said terminal (IP-T) again in said header in order to enable further forwarding of said internet packet to said terminal (T) according to said address of said terminal (IP-T) in said header.

11. A serving GPRS support node (SGSN) in a Generic Packet Radio System backbone network to downstream transport and to upstream transport an internet packet being destined to a terminal (T), respectively, from a gateway GPRS support node (GGSN) via said serving GPRS support node (SGSN) to a radio network controller (RNC), and from said radio network controller (RNC) via said serving GPRS support node (SGSN) to said gateway GPRS support node (GGSN), said internet packet comprises a header that comprises an address (IP-T) of said terminal (T), **characterized in that** said serving GPRS support node (SGSN) comprises:
- third inserting means (INS3) to insert, upon reception of said internet packet, in a backbone header of said packet, for the event of downstream transport of said internet packet (IP), an address of said radio network controller (RNC); and for the event of upstream transport of said internet packet an address of said gateway GPRS support node (GGSN); and
- third forwarding means (FORW3) to forward said internet packet according to said respective address in said backbone header being for the event of downstream transport of said internet packet said radio network controller (RNC) and being for the event of upstream transport of said internet packet said gateway GPRS support node (GGSN).

12. A Generic Packet Radio System backbone network to transport an internet packet being destined to a terminal (T) between a gateway GPRS support node (GGSN) via a serving GPRS support node (SGSN) and a radio network controller (RNC), **characterized in that** said Generic Packet Radio System backbone network comprises anyone of a gateway GPRS support node (GGSN) according to claim 9, a serving GPRS support node (SGSN) according to claim 11, and a radio network controller (RNC) according to claim 10.
